# EUROPEAN PATENT APPLICATION

(11) **EP 4 604 243 A1**
(43) Date of publication of application: **20.08.2025**
(21) Application number: 24862091.6
(22) Date of filing: 06.09.2024
(51) Int. Cl.: H01M 10/0525, H01M 10/058, H01M 4/131, H01M 4/136, H01M 4/04, H01M 4/1391, H01M 4/1397

(54) **BATTERY CELL AND PREPARATION METHOD THEREFOR, AND LITHIUM BATTERY COMPRISING BATTERY CELL**

(30) Priority: 07.09.2023 CN 202311161307; 07.09.2023 CN 202311154355
(71) Applicant: Eve Power Co., Ltd., Jingmen, Hubei 448000 (CN)
(72) Inventor: CHEN, Meng, Jingmen, Hubei 448000 (CN); WU, Hao, Jingmen, Hubei 448000 (CN); ZHU, Jiaxin, Jingmen, Hubei 448000 (CN); LIU, Fanfen, Jingmen, Hubei 448000 (CN); YUAN, Dingding, Jingmen, Hubei 448000 (CN)
(74) Representative: Herrero & Asociados, S.L.
(86) International application number: PCT/CN2024/117507
(87) International publication number: WO 2025/051253

(57) **Abstract**

A cell includes a positive-electrode sheet, a separator, and a negative-electrode sheet. The positive-electrode sheet includes a positive-electrode collector and a positive-electrode active material layer disposed on each of two surfaces of the positive-electrode collector; the positive-electrode active material layer includes a first active material layer and a second active material layer laminated on the first active material layer; and the first active material layer is in direct contact with a surface of the positive-electrode collector. The first active material layer comprises a ternary active material, the ternary active material has a specific surface area of 0.3-0.9 m²/g; the second active material layer comprises a lithium manganese iron phosphate material, the lithium manganese iron phosphate material has a specific surface area of 20-24 m²/g.

## Description

The present application claims priorities of: the Chinese patent application No. 202311161307.5, filed on September 7, 2023; and the Chinese patent application No. 2202311154355.1, filed on September 7, 2023. Contents of which are incorporated herein by their entireties.

### TECHNICAL FIELD

Embodiments of the present disclosure relate to the technical field of lithium-ion batteries, and more specifically, to a cell, a method of preparing a cell, and a lithium-ion battery configured with the cell.

### BACKGROUND

As the new energy technology develops, demands for lithium-ion batteries are gradually increasing. Lithium-ion batteries that are currently used substantially include ternary lithium-ion batteries and lithium manganese iron phosphate batteries. The ternary lithium-ion battery has a high energy density and an excellent charging-discharging rate. However, the ternary lithium-ion battery may be spontaneously combusted during usage, and may be exploded during pinprick, heating and thermal runaway tests. Therefore, the ternary lithium-ion battery has poor safety performance. Furthermore, the ternary lithium-ion battery has a short life service. According to research, the ternary lithium-ion battery has a large amount of capacity degradation after thousands of cyclic charging and discharging, and the ternary lithium-ion battery may be degraded to around 60% of the standardized amount. Therefore, application of the ternary lithium-ion battery is limited to a certain extent. Safety performance of the lithium manganese iron phosphate battery is superior to that of the ternary lithium-ion battery, however, the lithium manganese iron phosphate battery has a low energy density.

Therefore, blending ternary materials and lithium manganese iron phosphate to enable a cell to have a high energy density and improved safety performance is an effective improvement idea. In the related art, in a process of preparing a lithium-ion battery electrode, the lithium manganese iron phosphate is usually mixed with the ternary material, and the mixed material is made into paste and is coated.

### SUMMARY

### TECHNICAL PROBLEM

In the art, a homogenization and coating process of mixing the lithium manganese iron phosphate and the ternary material is not mature. A cell made from the homogenization and coating process has a large internal resistance and has a poor cyclic service life and poor electrochemical performance. In addition, safety performance of a battery prepared from the homogenization and coating process needs to be improved. For example, when a mass ratio of the lithium manganese iron phosphate to the ternary material is 5:1, a pass rate of a thermal runaway test is only 40%, seriously restricting application of the cell.

### TECHNICAL SOLUTION

In a first aspect, the present disclosure provides a cell according to following technical solutions.

A cell includes a positive-electrode sheet, a separator, and a negative-electrode sheet. The positive-electrode sheet comprises a positive-electrode collector and a positive-electrode active material layer disposed on each of two surfaces of the positive-electrode collector; the positive-electrode active material layer comprises a first active material layer and a second active material layer laminated on the first active material layer; and the first active material layer is in direct contact with a surface of the positive-electrode collector.

The first active material layer comprises a ternary active material, the ternary active material has a specific surface area of 0.3-0.9 m²/g; the second active material layer comprises a lithium manganese iron phosphate material, the lithium manganese iron phosphate material has a specific surface area of 20-24 m²/g.

In a second aspect, the present disclosure provides a method of preparing a cell according to following technical solutions.

A method of preparing a cell includes:
making the lithium manganese iron phosphate material and the ternary active material independently into slurries to obtain a lithium manganese iron phosphate slurry and a ternary active slurry;
coating the lithium manganese iron phosphate slurry and the ternary active slurry on each of the two surfaces of the positive-electrode collector along a thickness direction of the positive-electrode collector, wherein the ternary active slurry is coated on each of the two surfaces of the positive-electrode collector, the lithium manganese iron phosphate slurry is coated on a surface of the ternary active slurry; and after pressing, a positive-electrode sheet having the positive-electrode active material layer coated on each of two surfaces is obtained; and
assembling the positive-electrode sheet, the separator, and the negative-electrode sheet to obtain a finished cell.

In a third aspect, the present disclosure provides a lithium-ion battery according to following technical solutions

The lithium-ion battery includes the cell according to any of the above aspects.

In a fourth aspect, the present disclosure provides a cell, including: a positive-electrode sheet, a separator, and a negative-electrode sheet. The positive-electrode sheet comprises a positive-electrode collector, a lithium manganese iron phosphate coating, and a ternary material coating; the lithium manganese iron phosphate coating and the ternary material coating are alternately arranged along a width direction of the positive-electrode collector.

In a fifth aspect, the present disclosure provides a method of preparing the cell as follows.

The method of preparing the cell includes:
making the lithium manganese iron phosphate material and the ternary material independently into slurries to obtain a lithium manganese iron phosphate slurry and a ternary slurry;
coating the lithium manganese iron phosphate slurry and the ternary slurry on each of two surfaces of the positive-electrode collector along a length direction of the positive-electrode collector, wherein the lithium manganese iron phosphate slurry and the ternary slurry are alternately arranged along a width direction of the positive-electrode collector; and after pressing, the positive-electrode sheet having the lithium manganese iron phosphate coating and the ternary material coating is obtained;
coating a pure graphite slurry and a silicon-doped graphite slurry on a surface of the negative-electrode collector along a length direction of the negative-electrode collector; wherein the pure graphite slurry and the silicon-doped graphite slurry are alternately arranged along a width direction of the negative-electrode collector; and after pressing, the negative-electrode sheet having the pure graphite coating and the silicon-doped graphite coating is obtained;
controlling a region coated with the lithium manganese iron phosphate slurry on the positive-electrode collector to correspond to a region coated with the pure graphite slurry on the negative-electrode collector, and controlling a region coated with the ternary slurry on the positive-electrode collector to correspond to a region coated with the silicon-doped graphite slurry on the negative-electrode collector;
assembling the positive-electrode sheet, the separator, and the negative-electrode sheet to obtain the finished cell.

In a sixth aspect, the present disclosure provides a lithium-ion battery as follows.

The lithium-ion battery includes the cell according to any of the above aspects.

### TECHNICAL EFFECTS

(1) Currently, in order to improve safety performance of the ternary active material, the lithium manganese iron phosphate material is generally mixed with the ternary active material to obtain the mixed slurry. The mixed slurry is coated on the positive-electrode collector, and the positive-electrode sheet having the mixed coating is obtained after pressing. In practice, the present disclosure finds that, as slurry mixing finishes, stirring is stopped, the mixed slurry is precipitated and flocculated, and therefore, large particles are generated, which may have a great impact on subsequent coating and other processes. In this case, micropores, which are imperceptible by naked eyes, may be generated at an interface of the slurry and the collector, such that the safety performance and cycling performance of the cell may be greatly affected.
   Firstly, by controlling the specific surface area of the lithium manganese iron phosphate material and the ternary active material, interfacial fusion of the lithium manganese iron phosphate slurry and the ternary active slurry and interfacial fusion of the ternary active slurry and the surface of the positive-electrode collector are high. The number of micropores, which are imperceptible by the naked eyes and generated at the interface of the positive-electrode collector and the first active material layer and at the interface of the second active material layer and the first active material layer, is reduced. In this way, stability and safety of the positive-electrode during cycling can be improved. Furthermore, an infiltration effect of the electrolyte on the positive-electrode active material layer is improved, such that the second active material layer and the first active material layer in the positive-electrode active material layer have a consistent lithium removal rate, and inconsistency between lithium ion removal and lithium embedding in the active material layer during the cycling can be avoided, lithium ions are prevented from being accumulated in the lithium iron phosphate coating or in the first active material layer in the positive-electrode active material layer. Therefore, the cycling performance and the safety performance of the battery can be improved. Secondly, since conductivity of the ternary active slurry is better than that of the lithium manganese iron phosphate slurry, the charging-discharging rate of the battery can be significantly improved by coating the ternary active slurry on a side near the positive-electrode collector, and the second active material layer is disposed at the outermost layer. In this way, when an external force is applied, a certain buffering effect is provided for the first active material layer located near the surface of the positive-electrode collector. Furthermore, the lithium manganese iron phosphate material has excellent thermal stability. When the second active material layer is disposed above the first active material layer, heat spread across the ternary active material can be alleviated uniformly, further improving the safety performance of the cell. Thirdly, since the lithium manganese iron phosphate material and the ternary active material are independently made into slurries and the lithium manganese iron phosphate slurry and the ternary active slurry are coated, at the same time, on the surface of the positive-electrode collector along the thickness direction of the positive-electrode collector, a contact internal resistance between the large particles of the ternary active slurry and the small particles of the lithium manganese iron phosphate slurry in the slurry mixing. Therefore, an increase in the temperature is reduced, and the cycling service life of the cell is extended.
(2) Currently, the lithium manganese iron phosphate material and the ternary material are mixed to obtain the mixed slurry, and the mixed slurry is coated on the positive-electrode collector, and the positive-electrode sheet having the mixed coating is obtained after pressing. However, particle sizes of the lithium manganese iron phosphate material and particle sizes of the ternary material in the mixed slurry are significantly different from each other, and particles of the lithium manganese iron phosphate material and particle of the ternary material are not uniformly distributed in the mixed slurry, affecting homogeneity of the mixed coating. When the mixed slurry is coated on the collector, a precipitation speed of the lithium manganese iron phosphate material is different from a precipitation speed of the ternary material, intermolecular interaction forces are generated, and therefore, uniformity and stability of the coating on the surface of the positive-electrode collector are further reduced, affecting the stability of the cell and improving the internal resistance of the cell.

Firstly, the lithium manganese iron phosphate material and the ternary material are made into slurries separately, preventing the mixed slurry from affecting the stability and electrical performance of the positive-electrode sheet. Secondly, the lithium manganese iron phosphate has excellent thermal stability. When the lithium manganese iron phosphate and the ternary material are alternately coated on the surface of the collector, a region of the lithium manganese iron phosphate may serves as a buffer region to prevent heat spread across the ternary material, improving safety performance of the cell. Lastly, for the process in the art in which slurries are mixed firstly and then coated, since the lithium manganese iron phosphate material and the ternary material have different expansion rates over time, the coating may be loosened at later stages of cycling processes. By contrast, in the present disclosure, the lithium manganese iron phosphate coating and the ternary material coating are alternately and independently arranged to each other, coating loosening caused by different expansion rates of the lithium manganese iron phosphate material and the ternary material can be avoided. In this way, the stability of the electrode sheet in the cycling processes is improved, and the cycling performance of the cell is improved. In summary, the cell prepared in the present disclosure can simultaneously have excellent safety performance, an excellent charging-discharging rate and excellent cycling performance.

### BRIEF DESCRIPTION OF THE DRAWINGS

FIG. 1 is a cross-sectional view of each of two surfaces of a positive-electrode collector being coated with a positive-electrode active material layer according to an embodiment 1 of the present disclosure.
FIG. 2 is a structural schematic view of a positive-electrode sheet which is coated along a coating direction in a cell according to an embodiment 11 of the present disclosure.
FIG. 3 is a structural schematic view of a negative-electrode sheet which is coated along a coating direction in a cell according to an embodiment 11 of the present disclosure.

### Reference numerals:

1, positive-electrode collector; 2, positive-electrode active material layer; 21, first active material layer; 22, second active material layer; 11, lithium manganese iron phosphate; 12, ternary material; 3, negative-electrode collector; 31, graphite; 32, silicon-doped graphite.

### DETAILED DESCRIPTIONS

Unless otherwise indicated, all values used in the specification and claims to express amounts of ingredients, reaction conditions, and the like shall be interpreted as an approximate value. Therefore, unless indicated to contrary, numerical parameters used herein are approximated and can be varied according to desired properties.

The term "and/or" refers to one or all of mentioned elements.

Terms "comprise" and "include" are used herein to cover a case where only the mentioned elements are present and a case where, in addition to the mentioned elements, other un-mentioned elements are present.

All percentages in the present disclosure are by weight unless otherwise indicated.

Unless otherwise indicated, as used in the present specification, "a", "a type of", "one" and "the" are intended to include "at least one" or "one or more". For example, "a component" refers to one or more components. Therefore, more than one components may be considered and may be applied or used in implementations of the described embodiments.

In some embodiments, a lithium manganese iron phosphate material has a chemical formula LiFe _{1-x-z}MnₓD_{z}PO₄, 0.2 ≤ x ≤ 0.8, z > 0. The D includes at least one of: Mg, Ti, V, Ni, Co, Al, Nb, Y, Mo, Sr, La, Zr, and B. The Fe _{1-x-z}MnₓD_{z} is noted as M, a molar ratio of M/P is 0.90 to 1.15, a molar ratio of Li/M is 1.01 to 1.10, and a molar ratio of Li/P is 0.95 to 1.10.

In some embodiments, a first active material layer has a surface density of 40-100 g/m².

In some embodiments, a second active material layer has a surface density of 100-360 g/m².

By controlling the surface density of the second active material layer and the surface density of the first active material layer, inconsistency between a charge transfer efficiency of a coating of the second active material layer and a charge transfer efficiency of a coating of the first active material layer, during cycling processes, may be avoided. Influences on performance of the battery, such as capacities, an output power, and so on, can be reduced. More importantly, a positive and negative equivalent resistance of the battery is reduced, heat is prevented from generating at an interior of the battery, and a loss in the battery is avoided, short circuits and safety accidents caused by the interior heat and the loss can be avoided. Therefore, stability performance and safety performance of the battery are improved.

In some implementations, the first active material layer has a compacted density of 3.0-3.6 g/m³.

In some embodiments, the second active material layer has a compacted density of 2.0-2.6 g/m³.

By controlling the compacted density of the second active material layer and the compacted density of the first active material layer, the number of micropores between an interface of the first active material layer and a positive-electrode collector is reduced, and a dense and homogeneous transition interface is formed between the second active material layer and the first active material layer. In addition, contact performance between the first active material layer and a surface of the positive-electrode collector is excellent, the internal resistance of the battery is reduced, and cycling stability and the safety performance are improved. Moreover, due to a combined effect of the compacted densities and a surface density, a diffusion distance of lithium ions can be reduced, a concentration difference of the positive and negative electrode coating materials is smaller, such that a resistance against diffusion is reduced, the extent of an electrolyte rinsing the positive-electrode active material layer is improved, and a diffusion speed of the lithium ions in the cell is improved. Therefore, a cyclic service life of the cell is improved.

In some embodiments, a surface of a negative-electrode sheet is coated with a negative-electrode active material layer, and a negative-electrode active material of the negative-electrode active material layer has a specific surface area of 1-2 m²/g.

By controlling the specific surface area of the negative-electrode active material, the negative-electrode sheet may cooperate with the positive-electrode sheet to enable the lithium-ion battery to have a lithium removal rate consistent with a lithium embedding rate during cycling, such that the optimal amount of lithium ions can participate in the cycling, and the lithium ions are prevented from forming lithium crystalline dendrites on a surface of a negative electrode. Therefore, safety of the ternary lithium-ion battery is improved.

In some embodiments, the negative-electrode sheet includes a negative-electrode collector, a pure graphite coating, and a silicon-doped graphite coating. The pure graphite coating and the silicon-doped graphite coating are alternately arranged on the negative-electrode collector and along a width direction of the negative-electrode collector.

In some embodiments, a vertical projection of the lithium manganese iron phosphate coating on a separator overlaps with a vertical projection of the pure graphite coating on the separator. A vertical projection of the ternary material coating on the separator overlaps with a vertical projection of the silicon-doped graphite coating on the separator.

Since the ternary material has a large gram capacity, when coating the surface of the negative-electrode sheet, silicon-doped graphite and pure graphite are alternately coated, and a region of the pure graphite corresponds to a region of the lithium manganese iron phosphate, a region of the silicon-doped graphite corresponds to a region of the ternary material. In this way, the two materials have a sane N/P ratio, such that the safety performance and the cyclic service life of the cell are improved.

In some embodiments, each of a thickness of the lithium manganese iron phosphate coating and a thickness of the ternary material coating is in a range of 35 to135 µm.

By controlling thicknesses of coatings on the positive-electrode sheet to a certain extent, the diffusion distance of the lithium ions is reduced, the concentration difference between the positive-electrode coating and the negative-electrode coating is reduced, such that the resistance against diffusion is reduced, the diffusion speed of the lithium ions in the cell is improved, the cyclic service life of the cell is improved.

In some embodiments, the thickness of the lithium manganese iron phosphate coating is the same as the thickness of the ternary material coating.

By controlling a capacity of the lithium-ion battery within a proper range, lithium precipitation during cycling is prevented in the lithium-ion battery, the cycling performance and the safety performance of the lithium-ion battery are improved.

In some embodiments, a ratio of a width of the lithium manganese iron phosphate coating to a width of the ternary material coating is (1-8): 1.

By controlling the width of the lithium manganese iron phosphate coating and the width of the ternary material coating, the lithium manganese iron phosphate material can uniformly alleviate heat release of the ternary material, such that the surface of the positive-electrode sheet does not have a localized region where a temperature increase is excessively large. In this way, the safety performance and the cycling performance of the lithium-ion battery are significantly improved.

In some embodiments, a mass ratio of a lithium manganese iron phosphate slurry used in the lithium manganese iron phosphate coating to a ternary slurry used in the ternary material coating is (1-9): 1.

By controlling the amount of the lithium manganese iron phosphate slurry and the amount of the ternary slurry, the lithium manganese iron phosphate improves the safety performance of the cell configured with the ternary material without reducing the cycling performance and the electrochemical performance of the cell. The cell has a higher energy density with excellent cycling performance and excellent safety performance.

In some embodiments, the lithium manganese iron phosphate slurry includes the lithium manganese iron phosphate material, the lithium manganese iron phosphate material has the chemical formula LiFe _{1-x-z}MnₓD_{z}PO₄, the M is Fe_{1-x-z}MnₓD_{z}, 0.2 < x < 0.8, z > 0. A molar ratio of Li/P is 0.95 to 1.10, a molar ratio of M/P is 0.90 to 1.15, a molar ratio of Li/M is 1.01 to1.10. The D includes at least one of Mg, Ti, V, Ni, Co, Al, Nb, Y, Mo, Sr, La, Zr, B, and so on.

### Embodiments

### Embodiment 1

### 1. Preparation of positive-electrode sheet

In a step 1, a chemical formula of a lithium manganese iron phosphate material is LiFe_{0.15}Mn_{0.8}Ti_{0.05}PO₄, M= Fe_{0.15}Mn_{0.8}Ti_{0.05}. A molar ratio of M/P is 0.92, a molar ratio of Li/M is 1.03, and a molar ratio of Li/P is 0.95. A specific surface area of the lithium manganese iron phosphate material is 20 m²/g. The above lithium manganese iron phosphate material and a lithium nickel cobalt manganese oxide material having a specific surface area of 0.3 m²/g are independently made into slurries to obtain a lithium manganese iron phosphate slurry and a ternary active slurry.

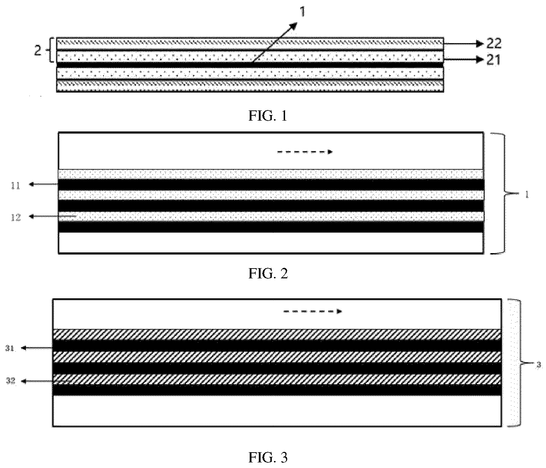

In a step 2, the lithium manganese iron phosphate slurry and the ternary active slurry are coated on each of two surfaces of a carbon-coated aluminum foil along a thickness direction of the carbon-coated aluminum foil, and a mass ratio of the lithium manganese iron phosphate slurry to the ternary active slurry is 1:1. The ternary active slurry is coated on two surfaces of the carbon-coated aluminum foil, the lithium manganese iron phosphate slurry is coated on a surface of the ternary active slurry. Pressing is performed, such that a positive-electrode active material layer is formed on the two surfaces of the carbon-coated aluminum foil. In the positive-electrode active material layer, a first active material layer has a surface density of 100 g/m² and a compacted density of 3.6 g/m³; and a second active material layer has a surface density of 100 g/ m² and a compacted density of 2g/m³. A coating structure of the positive-electrode sheet in the Embodiment 1 is shown in FIG. 1.

### 2 Preparation of negative-electrode sheet

A negative-electrode slurry is prepared as follows. An artificial graphite having a specific surface area of 1 m²/g, a conductive agent acetylene black, a thickener CMC, and a binder SBR, in a mass ratio of 96.4:1:1.2:1.4, are added to a vacuum mixer to obtain a mixture. Deionized water is added to the mixture to serve as a solvent. The vacuum mixer stirs the mixture to obtain a homogeneous mixed slurry, serving as a negative-electrode slurry.

The negative-electrode slurry is uniformly coated on two surfaces of a copper foil of a negative-electrode collector, the copper foil coated with the slurry is dried at the room temperature and is transferred to an oven to be further dried. After drying in the oven, a semi-finished product of the negative-electrode sheet is obtained. The semi-finished product is then cold pressed and cut to obtain a to-be-assembled negative-electrode sheet.

### 3. Preparation of cell and lithium ion battery

A commercially available polyethylene film is used as a separator for the lithium ion battery. The positive-electrode sheet, the separator, and the negative-electrode sheet are assembled to obtain a finished cell. Encapsulation, liquid injection, static placement, chemical formation, and capacity separation are performed to obtain a finished battery.

### Embodiment 2

Being different from the Embodiment 1, in the present embodiment, the positive-electrode sheet and the negative-electrode sheet are prepared as follows.

In the step 1, a chemical formula of the lithium manganese iron phosphate material is LiFe_{0.75}Mn_{0.2}Mg_{0.05}PO₄, M= Fe_{0.75}Mn_{0.2}Mg_{0.05}. The molar ratio of M/P is 1.05, the molar ratio of Li/M is 1.05, and the molar ratio of Li/P is 1.10. The specific surface area of the lithium manganese iron phosphate material is 24 m²/g. The above lithium manganese iron phosphate material and the lithium nickel cobalt manganese oxide material having a specific surface area of 0.9 m²/g are independently made into slurries to obtain the lithium manganese iron phosphate slurry and the ternary active slurry.

In the step 2, the lithium manganese iron phosphate slurry and the ternary active slurry are coated on each of two surfaces of the carbon-coated aluminum foil along the thickness direction of the carbon-coated aluminum foil, and the mass ratio of the lithium manganese iron phosphate slurry to the ternary active slurry is 9:1. The ternary active slurry is coated on two surfaces of the carbon-coated aluminum foil, the lithium manganese iron phosphate slurry is coated on a surface of the ternary active slurry. Pressing is performed, such that a positive-electrode active material layer is formed on the two surfaces of the carbon-coated aluminum foil. In the positive-electrode active material layer, the first active material layer has a surface density of 40 g/m² and a compacted density of 3.3 g/m³; and the second active material layer has a surface density of 360 g/m² and a compacted density of 2.6g/m³.

The negative-electrode active material used in preparing the negative-electrode sheet is the artificial graphite having a specific surface area of 2 m²/g.

The rest operations are consistent with the Embodiment 1.

### Embodiment 3

Being different from the Embodiment 1, in the present embodiment, the positive-electrode sheet and the negative-electrode sheet are prepared as follows.

In the step 1, a chemical formula of the lithium manganese iron phosphate material is LiFe_{0.35}Mn_{0.6}V_{0.05}PO₄, M= Fe_{0.35}Mn_{0.6}V_{0.05}. The molar ratio of M/P is 0.95, the molar ratio of Li/M is 1.01, and the molar ratio of Li/P is 0.96. The specific surface area of the lithium manganese iron phosphate material is 21 m²/g. The above lithium manganese iron phosphate material and the lithium nickel cobalt manganese oxide material having a specific surface area of 0.6 m²/g are independently made into slurries to obtain the lithium manganese iron phosphate slurry and the ternary active slurry.

In the step 2, the lithium manganese iron phosphate slurry and the ternary active slurry are coated on each of two surfaces of the carbon-coated aluminum foil along the thickness direction of the carbon-coated aluminum foil, and the mass ratio of the lithium manganese iron phosphate slurry to the ternary active slurry is 4:1. The ternary active slurry is coated on two surfaces of the carbon-coated aluminum foil, the lithium manganese iron phosphate slurry is coated on a surface of the ternary active slurry. Pressing is performed, such that a positive-electrode active material layer is formed on the two surfaces of the carbon-coated aluminum foil. In the positive-electrode active material layer, the first active material layer has a surface density of 70 g/m² and a compacted density of 3.0 g/m³; and the second active material layer has a surface density of 160 g/m² and a compacted density of 2.3g/m³.

The negative-electrode active material used in preparing the negative-electrode sheet is the artificial graphite having a specific surface area of 1.5 m²/g.

The rest operations are consistent with the Embodiment 1.

### Embodiment 4

Being different from the Embodiment 1, in the present embodiment, the positive-electrode sheet and the negative-electrode sheet are prepared as follows.

In the step 1, a chemical formula of the lithium manganese iron phosphate material is LiFe_{0.15}Mn_{0.8}Mg_{0.02}Ti_{0.03}PO₄, M= Fe_{0.15}Mn_{0.8}Mg_{0.02}Ti_{0.03}. The molar ratio of M/P is 0.94, the molar ratio of Li/Mn is 1.10, and the molar ratio of Li/P is 1.03. The specific surface area of the lithium manganese iron phosphate material is 22 m²/g. The above lithium manganese iron phosphate material and the lithium nickel cobalt manganese oxide material having a specific surface area of 0.7 m²/g are independently made into slurries to obtain the lithium manganese iron phosphate slurry and the ternary active slurry.

In the step 2, the lithium manganese iron phosphate slurry and the ternary active slurry are coated on each of two surfaces of the carbon-coated aluminum foil along the thickness direction of the carbon-coated aluminum foil, and the mass ratio of the lithium manganese iron phosphate slurry to the ternary active slurry is 1:1. The ternary active slurry is coated on two surfaces of the carbon-coated aluminum foil, the lithium manganese iron phosphate slurry is coated on a surface of the ternary active slurry. Pressing is performed, such that the positive-electrode active material layer is formed on the two surfaces of the carbon-coated aluminum foil. In the positive-electrode active material layer, the first active material layer has a surface density of 100 g/m² and a compacted density of 3.0 g/m³; and the second active material layer has a surface density of 100 g/m² and a compacted density of 2.0g/m³.

The negative-electrode active material used in preparing the negative-electrode sheet is the artificial graphite having a specific surface area of 2 m²/g.

The rest operations are consistent with the Embodiment 1.

### Embodiment 5

Being different from the Embodiment 3, in the present embodiment, during preparing the positive-electrode sheet, in the positive-electrode active material layer, the first active material layer has a surface density of 115 g/m² and a compacted density of 3.6 g/m³, and the second active material layer has a surface density of 92 g/m² and a compacted density of 2.0 g/m³. The rest operations are the same as those in the Embodiment 3.

### Embodiment 6

Being different from the Embodiment 3, in the present embodiment, during preparing the positive-electrode sheet, in the positive-electrode active material layer, the first active material layer has a surface density of 100 g/m² and a compacted density of 3.8 g/m³, and the second active material layer has a surface density of 100 g/m² and a compacted density of 1.8 g/m³. The rest operations are the same as those in the Embodiment 3.

### Embodiment 7

Being different from the Embodiment 3, in the present embodiment, during preparing the positive-electrode sheet, in the positive-electrode active material layer, the first active material layer has a surface density of 372 g/m² and a compacted density of 3.0 g/m³, and the second active material layer has a surface density of 31 g/m² and a compacted density of 2.0 g/m³. The rest operations are the same as those in the Embodiment 3.

### Embodiment 8

Being different from the Embodiment 3, in the present embodiment, during preparing the positive-electrode sheet, in the positive-electrode active material layer, the first active material layer has a surface density of 100 g/m² and a compacted density of 3.8 g/m³, and the second active material layer has a surface density of 360 g/m² and a compacted density of 1.8 g/m³. The rest operations are the same as those in the Embodiment 3.

### Embodiment 9

Being different from the Embodiment 3, in the present embodiment, during preparing the positive-electrode sheet, the mass ratio of the lithium manganese iron phosphate slurry to the ternary active slurry is 12:1. The rest operations are the same as those in the Embodiment 3.

### Embodiment 10

Being different from the Embodiment 3, in the present embodiment, during preparing the positive-electrode sheet, the mass ratio of the lithium manganese iron phosphate slurry to the ternary active slurry is 0.5:1. The rest operations are the same as those in the Embodiment 3.

### Control embodiment 1

Being different from the Embodiment 3, in the present embodiment, each of two surfaces of the carbon-coated aluminum foil is coated with the ternary active slurry. The rest operations are the same as those in the Embodiment 3.

### Control embodiment 2

Being different from the Embodiment 3, in the present embodiment, each of two surfaces of the carbon-coated aluminum foil is coated with the lithium manganese iron phosphate slurry. The rest operations are the same as those in the Embodiment 3.

### Control embodiment 3

Being different from the Embodiment 3, in the present embodiment, in the positive-electrode active material layer, the second active material layer is in direct contact with the surface of the carbon-coated aluminum foil, and the first active material layer is in direct contact with the surface of the second active material layer. The rest operations are the same as those in the Embodiment 3.

### Control embodiment 4

Being different from the Embodiment 3, in the present embodiment, the lithium manganese iron phosphate material, which is used to form the second active material layer, has a specific surface area of 2 m²/g, and the ternary active material, which is used to form the first active material layer, has a specific surface area of 16 m²/g. The rest operations are the same as those in the Embodiment 3.

### Control embodiment 5

Being different from the Embodiment 3, in the present embodiment, two sides of the carbon-coated aluminum foil are coated with the same coating, and a slurry for forming the coating is obtained by mixing lithium manganese iron phosphate material powder and ternary active material powder in a mass ratio of 4:1, and the mixed powder is made into the slurry. The rest operations are the same as those in the Embodiment 3.

### Test methods

### 1. Pinprick test

Pinprick tests are performed on lithium-ion batteries prepared from the Embodiments 1-10 and the Control embodiments 1-5, as follows. The lithium-ion batteries are placed in a thermostat at 25°C for 30 min, allowing the lithium-ion batteries to reach a constant temperature. The lithium-ion batteries at the constant temperature are charged at 1C of a constant current and a constant voltage to reach an upper limit voltage (4.2V). A cut-off current of charging is 0.05C. The fully charged lithium-ion batteries are transferred to a pinprick tester. An ambient temperature of the pinprick test is 25°C±2°C. A steel nail having a diameter of 5mm passes through a center of each lithium-ion battery at a constant speed of 25mm/s and stays in the lithium-ion battery for 1 hour. When the lithium-ion battery is not on fire and is not exploded, the lithium-ion battery is recorded as passing the pinprick test. In each test, 10 lithium-ion batteries are tested. The number of lithium-ion batteries passing the pinprick tests is used as an indicator of the safety performance of the lithium-ion batteries. Results of the pinprick tests are recorded in Table 1.

### 2. Energy density test

Energy density tests are performed on the lithium-ion batteries prepared from the Embodiments 1-10 and the Control embodiments 1-5, as follows. (1) The lithium-ion batteries at the ambient temperature of 25°C±2°C are charged at 0.33C of a constant current and a constant voltage to reach a voltage of 4.2V. A cut-off current of charging is 0.05C. The lithium-ion batteries then stay static for 30 min. (2) The lithium-ion batteries are discharged at 0.33C of a constant current to reach a voltage of 2.5V and then stay static for 30 min. (3) The steps (1)-(2) are repetitively performed for three times. An average value of three discharging energies E is recorded as ΔE. (4) An electronic scale is used to measure a mass M of the tested battery (in kg). (5) A discharging energy density of each tested battery is calculated and recorded as PED (in Wh.kg ⁻¹), a calculation formula is: PED = ^{△}E/M. The energy density is recorded in the Table 1.

### 3. Cycling performance test

Cycling performance tests are performed on the lithium-ion batteries prepared from the Embodiments 1-10 and the Control embodiments 1-5 as follows. Each lithium-ion battery is placed in a thermostat at 25°C for 30 min, allowing each lithium-ion battery to reach a constant temperature. The lithium-ion battery is charged at 1C of a constant current and a constant voltage to reach a voltage of 4.2V. A cut-off current of charging is 0.05C. The lithium-ion battery then stays static for 30min. (2) The lithium-ion battery is discharged at 1C of a constant current to reach a voltage of 2.5V and then stays static for 30min. (3) Steps (1)-(2) are repetitively performed until a capacity retention rate is 80% of an initial capacity of the lithium-ion battery, and the number of times of cycling is recorded in the Table 1.

**Table 1**

| Serie number | Pass rate of pinprick tests | Energy density/Wh.kg-1 | Cycling service life/ the number of times of cycling |
|---|---|---|---|
| Embodiment 1 | 90 | 236 | 2550 |
| Embodiment 2 | 100 | 211 | 2500 |
| Embodiment 3 | 100 | 222 | 2530 |
| Embodiment 4 | 90 | 235 | 2535 |
| Embodiment 5 | 90 | 238 | 2310 |
| Embodiment 6 | 100 | 236 | 2300 |
| Embodiment 7 | 100 | 234 | 2320 |
| Embodiment 8 | 100 | 235 | 2305 |
| Embodiment 9 | 100 | 202 | 2498 |
| Embodiment 10 | 30 | 243 | 2156 |
| Control embodiment 1 | 10 | 250 | 2040 |
| Control embodiment 2 | 100 | 195 | 2015 |
| Control embodiment 3 | 50 | 220 | 2025 |
| Control embodiment 4 | 100 | 221 | 2216 |
| Control embodiment 5 | 60 | 221 | 2100 |

According to the Embodiments 1-4, Control embodiments 1-5, FIG. 1 and Table 1, by coating the lithium manganese iron phosphate slurry and the ternary active slurry along the thickness direction of the positive-electrode collector and by controlling the specific surface area of the lithium manganese iron phosphate material and the specific surface area of the ternary active material, the safety performance, the energy density, and the cycling performance of the cell can be improved. This is because the coating manner described above prevents an increase in the internal resistance of the cell caused by the mixed slurry. By controlling the specific surface area of the lithium manganese iron phosphate material and the specific surface area of the ternary active material, interfacial fusion between the second active material layer and the first active material layer and interfacial fusion between the first active material layer and the surface of the positive-electrode collector are high, and therefore, harmful micropores are prevented from being generated at interfaces, and stability of the positive-electrode sheet in cycling processes and the energy density of the positive-electrode sheet are improved. In addition, by arranging the second active material layer on the first active material layer, the second active material layer can effectively slow down heat released from the ternary active material during charging and discharging processes, such that thermal stability of the cell is improved. The second active material layer is disposed at an outermost layer of the positive-electrode active material layer. When an external force is applied, a certain cushioning effect is provided for the first active material layer disposed near the surface of the positive-electrode collector. Therefore, the safety performance of the cell is improved, and the service life of the battery is increased.

According to the Embodiments 3, 5-8 and Table 1, adjustment of the compacted density and surface density in the Embodiments 5-8 has a more positive effect on the safety performance and the energy density of the positive-electrode sheet. This is because by regulating the compacted density and the surface density, probability of generating the micropores at the interface between the positive-electrode active material layer and the positive-electrode collector is reduced, such that the cell has excellent safety performance and an improved energy density.

Moreover, by adjusting the compacted density and the surface density, the thickness of the positive-electrode active material layer is prevented from being excessively large or small. This is because, although an increase in the thickness of the electrode can increase the amount of the active material to further increase the energy density of the battery, electrochemical performance of the battery can be affected negatively. Consumption of a portion of the electrolyte disposed at a side of a thicker electrode near the collector can be large, and therefore, a capacity loss of the electrode is increased. On the one hand, when the electrode is thicker, a greater difference in electrochemical rates within the electrode is generated, inhomogeneity of electrochemical reactions within the active material layer of the positive electrode is increased, such that the battery capacity is decreased. On the other hand, various portions of the battery may have various size changes, and therefore, stresses within the electrode are accumulated, leading to an increase in impedance, further weakening discharging performance of the battery, causing more side reactions, and resulting in decline in the battery capacity.

According to Embodiments 3, 9-10 and Table 1, when the mass ratio of the lithium manganese iron phosphate material to the ternary active material is excessively low, the safety performance of the battery decreases, and the energy density increases. When the mass ratio is excessively high, the safety performance of the lithium-ion battery improves, but the energy density decreases. Therefore, according to different application scenarios and design principles, different mixing ratios can be applied. In this way, the lithium-ion battery, while obtaining excellent cycling performance, can have a high energy density and high safety performance.

### Example 11

### 1. Preparing positive-electrode sheet

In a step 1, the lithium manganese iron phosphate material and the lithium nickel cobalt manganese oxide material are independently made into slurries to obtain the lithium manganese iron phosphate slurry and the ternary slurry.

In a step 2, the lithium manganese iron phosphate slurry and the ternary slurry are coated on the surface of the positive-electrode collector along a length direction of the positive-electrode collector. The mass ratio of the lithium manganese iron phosphate slurry to the ternary slurry is 5:1. The lithium manganese iron phosphate slurry and the ternary slurry are alternately arranged along a width direction of the positive-electrode collector. A ratio of a width of the lithium manganese iron phosphate coating to a width of the ternary material coating is 4:1. After pressing, the positive-electrode sheet having the lithium manganese iron phosphate coating and the ternary material coating on the surface thereof is obtained. A thickness of the lithium manganese iron phosphate coating is 85 µm, and a thickness of the ternary material coating is 90 µm.

The lithium manganese iron phosphate slurry includes the lithium manganese iron phosphate material, the chemical formula of the lithium manganese iron phosphate material is LiFe_{1-x-z}MnₓD_{z}PO₄, M is Fe _{1-x-z}MnₓD_{z}, x=0.6, z=0.05. The molar ratio of Li/P is 1.05, the molar ratio of M/P is 1.05, the molar ratio of Li/M is 1.05, and the D is Mg. Slurries coated on the positive-electrode sheet is shown in FIG. 2.

### 2. Preparing negative-electrode sheet

The pure graphite slurry is coated on the surface of the negative-electrode collector along a length direction of the negative-electrode collector. After pressing, a negative-electrode sheet having the pure graphite coated on a surface thereof is obtained.

### 3. Preparing cell

The positive-electrode sheet, the separator, and the negative-electrode sheet are assembled to each other to obtain a finished cell.

### 4. Assembling lithium-ion battery

The cell is assembled to obtain the lithium-ion battery.

Coating on the surface of the positive-electrode sheet in the present embodiment is shown in FIG. 2; coating on the surface of the negative-electrode sheet in the present embodiment is shown in FIG. 3.

### Embodiment 12

Being different from the Embodiment 11, in the present embodiment, the positive-electrode sheet is prepared as follows.

In the step 1, the lithium manganese iron phosphate material and the lithium nickel cobalt manganese oxide material are independently made into slurries to obtain the lithium manganese iron phosphate slurry and the ternary slurry.

In the step 2, the lithium manganese iron phosphate slurry and the ternary slurry are coated on the surface of the positive-electrode collector along the length direction of the positive-electrode collector. The mass ratio of the lithium manganese iron phosphate slurry to the ternary slurry is 1:1. The lithium manganese iron phosphate slurry and the ternary slurry are alternately arranged along the width direction of the positive-electrode collector. The ratio of the width of the lithium manganese iron phosphate coating to the width of the ternary material coating is 1:1. After pressing, the positive-electrode sheet having the lithium manganese iron phosphate coating and the ternary material coating on the surface thereof is obtained. The thickness of the lithium manganese iron phosphate coating is 40 µm, and the thickness of the ternary material coating is 35 µm.

The lithium manganese iron phosphate slurry includes the lithium manganese iron phosphate material, the chemical formula of the lithium manganese iron phosphate material is LiFe_{1-x-z}MnₓD_{z}PO₄, M is Fe _{1-x-z}MnₓD_{z}, x=0.3, z=0.1. The molar ratio of Li/P is 0.95, the molar ratio of M/P is 1.15, the molar ratio of Li/M is 1.10, and the D is a mixture of Mg and Ti. The rest operations are the same as those in the Embodiment 11.

### Embodiment 13

Being different from the Embodiment 11, in the present embodiment, the positive-electrode sheet is prepared as follows.

In the step 1, the lithium manganese iron phosphate material and the lithium nickel cobalt aluminum oxide material are independently made into slurries to obtain the lithium manganese iron phosphate slurry and the ternary slurry.

In the step 2, the lithium manganese iron phosphate slurry and the ternary slurry are coated on the surface of the positive-electrode collector along the length direction of the positive-electrode collector. The mass ratio of the lithium manganese iron phosphate slurry to the ternary slurry is 9:1. The lithium manganese iron phosphate slurry and the ternary slurry are alternately arranged along the width direction of the positive-electrode collector. The ratio of the width of the lithium manganese iron phosphate coating to the width of the ternary material coating is 8:1. After pressing, the positive-electrode sheet having the lithium manganese iron phosphate coating and the ternary material coating on the surface thereof is obtained. The thickness of the lithium manganese iron phosphate coating is 135 µm, and the thickness of the ternary material coating is 130 µm.

The lithium manganese iron phosphate slurry includes the lithium manganese iron phosphate material, the chemical formula of the lithium manganese iron phosphate material is LiFe_{1-x-z}MnₓD_{z}PO₄, M is Fe _{1-x-z}MnₓD_{z}, x=0.7, z=0.1. The molar ratio of Li/P is 1.10, the molar ratio of M/P is 0.90, the molar ratio of Li/M is 1.01, and the D is Zr.

The rest operations are the same as those in the Embodiment 11.

### Embodiment 14

Being different from the Embodiment 11, in the present embodiment, the positive-electrode sheet is prepared as follows.

In the step 1, the lithium manganese iron phosphate material and the lithium nickel cobalt aluminum oxide material are independently made into slurries to obtain the lithium manganese iron phosphate slurry and the ternary slurry.

In the step 2, the lithium manganese iron phosphate slurry and the ternary slurry are coated on the surface of the positive-electrode collector along the length direction of the positive-electrode collector. The mass ratio of the lithium manganese iron phosphate slurry to the ternary slurry is 7:1. The lithium manganese iron phosphate slurry and the ternary slurry are alternately arranged along the width direction of the positive-electrode collector. The ratio of the width of the lithium manganese iron phosphate coating to the width of the ternary material coating is 4:1. After pressing, the positive-electrode sheet having the lithium manganese iron phosphate coating and the ternary material coating on the surface thereof is obtained. The thickness of the lithium manganese iron phosphate coating is 110 µm, and the thickness of the ternary material coating is 100 µm.

The lithium manganese iron phosphate slurry includes the lithium manganese iron phosphate material, the chemical formula of the lithium manganese iron phosphate material is LiFe_{1-x-z}MnₓD_{z}PO₄, M is Fe _{1-x-z}MnₓD_{z}, x=0.7, z=0.1. The molar ratio of Li/P is 1.05, the molar ratio of M/P is 0.95, the molar ratio of Li/M is 1.03, and the D is Zr.

The rest operations are the same as those in the Embodiment 11.

### Embodiment 15

Being different from the Embodiment 11, in the present embodiment, the negative-electrode sheet is prepared as follows.

### 2. Preparing negative-electrode sheet

A pure graphite slurry and a silicon-doped graphite slurry are coated on a surface of the negative-electrode collector in a length direction of the negative-electrode collector. The pure graphite slurry and the silicon-doped graphite slurry are alternately arranged along a width direction of the negative-electrode collector. After pressing, a negative-electrode sheet coated having a pure graphite coating and a silicon-doped graphite coating on a surface thereof is obtained. A positive electrode sheet in which a vertical projection of the lithium manganese iron phosphate coating on the separator overlaps with a vertical projection of the pure graphite coating on the separator, and a vertical projection of the ternary material coating on the separator overlaps with a vertical projection of the silicon-doped graphite coating on separator diaphragm, is obtained. The rest operations are the same as those in the Embodiment 11. Slurries coating on the negative-electrode sheet is shown as 31.

### Embodiment 16

Being different from the Embodiment 11, in the present embodiment, during preparing the positive-electrode sheet, each of the thickness of the lithium manganese iron phosphate coating and the thickness of the ternary material coating is 90 µm. The rest operations are the same as those in the Embodiment 11.

### Embodiment 17

Being different from the Embodiment 11, in the present embodiment, during preparing the positive-electrode sheet, the ratio of the width of the lithium manganese iron phosphate coating to the width of the ternary material coating is 0.5:1. The rest operations are the same as those in the Embodiment 11.

### Embodiment 18

Being different from the Embodiment 11, in the present embodiment, during preparing the positive-electrode sheet, the ratio of the width of the lithium manganese iron phosphate coating to the width of the ternary material coating is 10:1. The rest operations are the same as those in the Embodiment 11.

### Embodiment 19

Being different from the Embodiment 11, in the present embodiment, during preparing the positive-electrode sheet, the mass ratio of the lithium manganese iron phosphate material to the ternary material is 0.2:1. The rest operations are the same as those in the Embodiment 11.

### Embodiment 20

Being different from the Embodiment 11, in the present embodiment, during preparing the positive-electrode sheet, the mass ratio of the lithium manganese iron phosphate material to the ternary material is 12:1. The rest operations are the same as those in the Embodiment 11.

### Embodiment 21

Being different from the Embodiment 11, in the present embodiment, during preparing the positive-electrode sheet and the negative-electrode sheet, the vertical projection of the lithium manganese iron phosphate coating on the separator overlaps with the vertical projection of the silicon-doped graphite coating on the separator, and the vertical projection of the ternary material coating on the separator overlaps with the vertical projection of the pure graphite coating on the separator. The rest operations are the same as those in the Embodiment 11.

### Control embodiment 6

Being different from the Embodiment 11, in the present embodiment, during preparing the positive-electrode sheet, the lithium manganese iron phosphate slurry and the ternary slurry are mixed uniformly with each other and are coated on the surface of the positive-electrode collector to form a mixed coating having a thickness of 90 µm. The rest operations are the same as those in the Embodiment 11.

### Control embodiment 7

Being different from the Embodiment 11, in the present embodiment, during preparing the positive-electrode sheet, the surface of the positive-electrode collector is coated with only lithium manganese iron phosphate slurry, and the lithium manganese iron phosphate coating having a thickness of 90 µm is formed. The rest operations are the same as those in the Embodiment 11.

### Control embodiment 8

Being different from the Embodiment 11, in the present embodiment, during preparing the positive-electrode sheet, the surface of the positive-electrode collector is coated with only ternary slurry, and the ternary material coating having a thickness of 90 µm is formed; the surface of the negative-electrode collector is coated with only the silicon-doped graphite slurry. The rest operations are the same as those in the Embodiment 11.

### Test methods

### 1. Thermal runaway test

The thermal runaway test is performed on the lithium-ion batteries prepared from the Embodiments 10-21 and the Control embodiment 6-8 as follows. Each lithium-ion battery is charged to 100% SOC at 1C of a constant current and a constant voltage, and is then charged for 12min at 1C of a constant current. A heating device is started to heat the battery. When the battery reaches thermal runaway or a large surface temperature of 300°C, the heating device is turned off. The battery is observed for 1h. When the battery is not on fire or exploded, the battery is recorded as passing the thermal runaway test. The number of lithium-ion batteries that passed the thermal runaway test is used as an indicator for evaluating the safety performance of lithium-ion batteries and is recorded in Table 2.

### 2. Charing and discharging rate test

Charing and discharging rate tests are performed on the lithium-ion batteries prepared from the Embodiments 10-21 and the Control embodiment 6-8 as follows. At 25° C., each lithium-ion battery is charged to a voltage 4.2 V at 0.33 C of a constant current and is then charged at a constant voltage to a current of 0.05 C and is cut off. The lithium-ion battery is discharged at 0.33 C of a constant current to reach a voltage of 2.8 V, and a discharging capacity is recorded as Q1. The lithium-ion battery is then charged to reach the voltage of 4.2 V at 0.33 C of a constant current and then charged at a constant voltage to the current of 0.05 C cutoff. The lithium-ion battery is then discharged at 3C of a constant current, and a discharging capacity is recorded as Q2. A ratio of Q2/Q1 is recorded in Table 2 and used as an indicator of the charging and discharging performance.

### 3. Cycling performance test

Cycling performance tests are performed on the lithium-ion batteries prepared from the Embodiments 10-21 and the Control embodiment 6-8 as follows. Each lithium-ion battery is placed in a thermostat at 25° C for 30min, allowing the lithium-ion battery to reach a constant temperature. The lithium-ion battery reaching the constant temperature is discharged at 1C of a constant current to a voltage of 2.8 V and stays static for 30 min, and is charged at 1C of a constant current to a voltage of 4.2 V. The lithium-ion battery is then charged at a constant voltage of 4.2 V to a current of 0.05 C and then stays static for 30 min. The lithium-ion battery is discharged at 1C to a voltage of 2.8 V. The above operations are performed cyclically until a capacity retention rate is 80% of the initial capacity of the battery, and test data are recorded in Table 2.

**Table 2**

| Serial number | Pass rate of the thermal runaway test | Charing and discharging rate | Cycling service life/ the number of times of cycling |
|---|---|---|---|
| Embodiment 11 | 80 | 97.2 | 2205 |
| Embodiment 12 | 70 | 97.6 | 2210 |
| Embodiment 13 | 100 | 97.6 | 2206 |
| Embodiment 14 | 90 | 96.7 | 2198 |
| Embodiment 15 | 85 | 97.1 | 2635 |
| Embodiment 16 | 85 | 97.3 | 2650 |
| Embodiment 17 | 75 | 97.1 | 2215 |
| Embodiment 18 | 75 | 97.2 | 2195 |
| Embodiment 19 | 60 | 98 | 1985 |
| Embodiment 20 | 90 | 96.4 | 1980 |
| Embodiment 21 | 80 | 97.1 | 1800 |
| Control embodiment 6 | 50 | 94.9 | 1505 |
| Control embodiment 7 | 100 | 93.2 | 2185 |
| Control embodiment 8 | 10 | 98.3 | 2220 |

According to the Embodiments 11-14, Control embodiments 6-8, FIG. 2, and Table 2, since the lithium manganese iron phosphate slurry and the ternary slurry are arranged alternately along a direction perpendicular to the coating direction on the positive-electrode sheet, the safety performance, the charging and discharging rate, and cycling performance of the cell are improved. This is because, by performing the above-described coating manner, an increase in the internal resistance of the cell caused by coating a mixed slurry is avoided, and stability of the electrode sheet during cycling is improved, such that the cycling performance and the charging and discharging rate of the cell are improved. In addition, the lithium manganese iron phosphate material slows down thermal diffusion of the ternary material in the thermal runaway test, and therefore, the safety performance of the cell is improved.

According to the Embodiments 11, 15, 21, FIGS. 2-3, and Table 2, when the pure graphite and the silicon-doped graphite coated on the surface of the negative electrode correspond to the lithium manganese iron phosphate material and the ternary material coated on the surface of the positive electrode, the safety performance and the cycling performance of the cell are slightly improved. This is because a larger gram amount of the ternary material is used, and by performing the above-mentioned coating manner, the two materials may have a consistent N/P ratio. In this way, comprehensive performance of the cell is improved, which is represented as the safety performance and the cycling performance of the lithium-ion battery being improved.

According to the Embodiments 11, 16 and Table 2, by adjusting the lithium manganese iron phosphate coating and the ternary material coating to have the same thickness, the cycling performance and the safety performance of the lithium-ion battery can be further improved. This is because, when the thickness of the lithium manganese iron phosphate coating is the same as the thickness of the ternary material coating in the positive-electrode sheet, lithium ions in the lithium manganese iron phosphate coating and lithium ions the ternary material coating may have a same migration path. In this way, lithium embedding states of the two coatings on the surface of the negative-electrode sheet are more uniform with each other, which is manifested as the cycling performance and the safety performance of the lithium-ion battery being improved.

According to the Embodiments 11 and 17-18 and Table 2, when the ratio of the width of the lithium manganese iron phosphate coating to the width of the ternary material coating is in an appropriate range, the lithium manganese iron phosphate can sufficiently alleviate the heat released from the ternary material coating region, such that the heat released from the electrode sheet is kept uniform. In this way, localized overheating in the cell is prevented, and the safety performance of the lithium-ion battery is improved.

According to Embodiments 11 and 19-20, and Table 2, when the mass ratio of the lithium manganese iron phosphate to the ternary material is in an appropriate range, the safety performance, the charging and discharging rate, and the cycling performance of the cell are more balanced. Although the lithium manganese iron phosphate has excellent safety performance that can alleviate the problem of poorer safety performance of ternary material, when the mass ratio of the lithium manganese iron phosphate to the ternary material is excessively large, the safety performance of the lithium-ion battery is only slightly improved. When the mass ratio of the lithium manganese iron phosphate to the ternary material is excessively small, the safety performance of lithium-ion battery is greatly reduced. In addition, when the mass ratio is excessively large or excessively small, the cycling performance of the lithium-ion battery decreases significantly. This is because, when the mass ratio is in the appropriate range, the heat can be more uniformly released during charging and discharging, and excellent synergistic cooperation can be achieved between the lithium manganese iron phosphate material and the ternary material. The results show that, only when the mass ratio is within the appropriate range, the cell can achieve balance of the safety performance, the charging and discharging rate and the cycling performance.

## Claims

1. A cell, comprising a positive-electrode sheet, a separator, and a negative-electrode sheet,
wherein the positive-electrode sheet comprises a positive-electrode collector and a positive-electrode active material layer disposed on each of two surfaces of the positive-electrode collector; the positive-electrode active material layer comprises a first active material layer and a second active material layer laminated on the first active material layer; and the first active material layer is in direct contact with a surface of the positive-electrode collector;
the first active material layer comprises a ternary active material, the ternary active material has a specific surface area of 0.3-0.9 m²/g; the second active material layer comprises a lithium manganese iron phosphate material, the lithium manganese iron phosphate material has a specific surface area of 20-24 m²/g.

2. The cell according to claim 1, wherein the lithium manganese iron phosphate material has a chemical formula LiFe_{1-x-z}MnₓD_{z}PO₄, 0.2 ≤ x ≤ 0.8, z > 0;
the D comprises at least one of: Mg, Ti, V, Ni, Co, Al, Nb, Y, Mo, Sr, La, Zr, and B; the Fe_{1-x-z}MnₓD_{z} is noted as M, a molar ratio of M/P is 0.90 to 1.15, a molar ratio of Li/M is 1.01 to 1.10, and a molar ratio of Li/P is 0.95 to 1.10.

3. The cell according to claim 1, wherein the first active material layer has a surface density of 40 to 100 g/m².

4. The cell according to claim 1, wherein the second active material layer has a surface density of 100-360 g/m².

5. The cell according to claim 1, wherein the first active material layer has a compacted density of 3.0-3.6 g/m³.

6. The cell according to claim 1, wherein the second active material layer has a compacted density of 2.0-2.6 g/m³.

7. The cell according to claim 1, wherein a surface of the negative-electrode sheet is coated with a negative-electrode active material layer, and a negative-electrode active material of the negative-electrode active material layer has a specific surface area of 1-2 m²/g.

8. A method of preparing the cell according to any one of claims 1 to 7, the method comprising:
making the lithium manganese iron phosphate material and the ternary active material independently into slurries to obtain a lithium manganese iron phosphate slurry and a ternary active slurry;
coating the lithium manganese iron phosphate slurry and the ternary active slurry on each of the two surfaces of the positive-electrode collector along a thickness direction of the positive-electrode collector, wherein the ternary active slurry is coated on each of the two surfaces of the positive-electrode collector, the lithium manganese iron phosphate slurry is coated on a surface of the ternary active slurry; and after pressing, a positive-electrode sheet having the positive-electrode active material layer coated on each of two surfaces is obtained; and
assembling the positive-electrode sheet, the separator, and the negative-electrode sheet to obtain a finished cell.

9. A cell obtained by performing the method according to claim 8, wherein, in the coating step, a mass ratio of the lithium manganese iron phosphate slurry to the ternary active slurry is 1-9: 1.

10. A lithium-ion battery, comprising the cell according to any one of claims 1 to 8.

11. A cell, comprising: a positive-electrode sheet, a separator, and a negative-electrode sheet, wherein the positive-electrode sheet comprises a positive-electrode collector, a lithium manganese iron phosphate coating, and a ternary material coating; the lithium manganese iron phosphate coating and the ternary material coating are alternately arranged along a width direction of the positive-electrode collector.

12. The cell according to claim 11, wherein the negative-electrode sheet comprises a negative-electrode collector, a pure graphite coating, and a silicon-doped graphite coating; the pure graphite coating and the silicon-doped graphite coating are alternately coated along a width direction of the negative-electrode collector.

13. The cell according to claim 12, wherein a vertical projection of the lithium manganese iron phosphate coating on the separator overlaps with a vertical projection of the pure graphite coating on the separator, and a vertical projection of the ternary material coating on the separator overlaps with a vertical projection of the silicon-doped graphite coating on the separator.

14. The cell according to claim 11, wherein, each of a thickness of the lithium manganese iron phosphate coating and a thickness of the ternary material coating is 35 to 135 µm.

15. The cell according to any one of claims 11 to 14, wherein the thickness of the lithium manganese iron phosphate coating is the same as the thickness of the ternary material coating.

16. The cell according to claim 11, wherein, a ratio of a width of the lithium manganese iron phosphate coating to a width of the ternary material coating is (1-8): 1.

17. The cell according to claim 11, wherein, a mass ratio of a lithium manganese iron phosphate slurry in the lithium manganese iron phosphate coating to a ternary slurry used in the ternary material coating is (1-9): 1.

18. The cell according to claim 17, wherein the lithium manganese iron phosphate slurry comprises a lithium manganese iron phosphate material, the lithium manganese iron phosphate material has a chemical formula LiFe_{1-x-z}MnₓD_{z}PO₄, M is Fe_{1-x-z}MnₓD_{z}, 0.2 < x < 0.8, z > 0;
a molar ratio of Li/P is 0.95 to 1.10, a molar ratio of M/P is 0.90 to 1.15, and a molar ratio of Li/M is 1.01 to 1.10; and the D comprises at least one of: Mg, Ti, V, Ni, Co, Al, Nb, Y, Mo, Sr, La, Zr, and B.

19. A method of preparing the cell according to any one of claims 11 to 18, the method comprising:
making the lithium manganese iron phosphate material and the ternary material independently into slurries to obtain a lithium manganese iron phosphate slurry and a ternary slurry;
coating the lithium manganese iron phosphate slurry and the ternary slurry on each of two surfaces of the positive-electrode collector along a length direction of the positive-electrode collector, wherein the lithium manganese iron phosphate slurry and the ternary slurry are alternately arranged along a width direction of the positive-electrode collector; and after pressing, the positive-electrode sheet having the lithium manganese iron phosphate coating and the ternary material coating is obtained;
coating a pure graphite slurry and a silicon-doped graphite slurry on a surface of the negative-electrode collector along a length direction of the negative-electrode collector; wherein the pure graphite slurry and the silicon-doped graphite slurry are alternately arranged along a width direction of the negative-electrode collector; and after pressing, the negative-electrode sheet having the pure graphite coating and the silicon-doped graphite coating is obtained;
controlling a region coated with the lithium manganese iron phosphate slurry on the positive-electrode collector to correspond to a region coated with the pure graphite slurry on the negative-electrode collector, and controlling a region coated with the ternary slurry on the positive-electrode collector to correspond to a region coated with the silicon-doped graphite slurry on the negative-electrode collector; and
assembling the positive-electrode sheet, the separator, and the negative-electrode sheet to obtain the finished cell.

20. A lithium-ion battery, comprising the cell according to any one of claims 11-18.
